# EUROPÄISCHE PATENTANMELDUNG

(11) **EP 1 550 591 A1**
(43) Veröffentlichungstag der Anmeldung: **06.07.2005**
(21) Anmeldenummer: 04026137.2
(22) Anmeldetag: 04.11.2004
(51) Int. Cl.: B60S 1/08

(54) **Scheibenwischvorrichtung, insbesondere für ein Kraftfahrzeug**

(30) Priorität: 29.12.2003 DE 10361745
(71) Anmelder: ROBERT BOSCH GMBH, 70442 Stuttgart (DE)
(72) Erfinder: Zimmer, Joachim, 77880 Sasbach (DE); May, Michael, 77654 Offenburg (DE); Metz, Ulrich, 77855 Achern (DE)

(57) **Zusammenfassung**

Es wird eine Scheibenwischvorrichtung (10), insbesondere für eine Scheibe (12) eines Kraftfahrzeugs vorgeschlagen. Diese umfasst einen Antrieb (40), der durch eine Mechanik (16) ein Wischblatt (14) zumindest zwischen zwei Wischblattendpositionen (38, 36) korrelierten Antriebspositionen (40, 50) bewegbar ist und eine Steuereinrichtung (18) aufweist, die die Bewegung des Antriebs (40) steuert und die Spiele der Mechanik (16) lebensdauerabhängig kompensiert. Erfindungsgemäß wird vorgeschlagen, dass die Kompensation in Abhängigkeit des aktuellen Betriebszustands durchführbar ist.

## Beschreibung

### Stand der Technik

Die Erfindung betrifft eine Scheibenwischvorrichtung, insbesondere für ein Kraftfahrzeug nach Gattung des unabhängigen Anspruchs.

Im Stand der Technik sind schon zahlreiche derartige Vorrichtungen bekannt. Diese Scheibenwischvorrichtungen weisen einen Elektromotor mit einem Schneckengetriebe als Antrieb auf, dessen Abtriebswelle zwischen zwei Antriebsendpositionen pendelt. Die Abtriebswelle ist über ein Mechanik mit den Wischerarmen verbunden, die an ihrem Ende jeweils ein Wischblatt tragen. Die Umkehrpunkte der Wischblätter auf der Scheibe, die sogenannten Wischblattendpositionen, bestimmen das Wischfeld und sind im wesentlichen von den Antriebsendposition des Antriebs und von den Spielen der Lager bzw. der Elastizität der Mechanik selbst bestimmt.

Zur Kompensation der Spiele der Lager und der Elastizitäten der Mechanik, die mit stärkender Lebensdauer bzw. mit stärkender Anzahl von Lastwechsel immer größer wird, wird in der DE-A-100 35 042 vorgeschlagen, die Antriebsendpositionen entsprechend der Lebensdauer der Scheibenwischvorrichtung bzw. der Anzahl der Lastwechsel der Scheibenwischvorrichtung zu verändern. Hierdurch wird beispielsweise verhindert, dass sich mit steigender Lebensdauer der Scheibenwischvorrichtung die Wischblattendposition - bei gleichbleibender Antriebsendposition - immer weiter von der A-Säule des Kraftfahrzeugs entfernt und somit das Wischfeld der Wischblätter einschränkt.

### Vorteile der Erfindung

Die erfindungsgemäße Vorrichtung mit den Merkmalen des Hauptanspruchs hat den Vorteil, dass die lebensdauerabhängige Kompensation der Spiele in Abhängigkeit des aktuellen Betriebszustands durchführbar ist. Damit kann die Kompensation je nach Betriebszustand der Scheibenwischvorrichtung eingestellt werden, wodurch das Wischfeld für alle Betriebszustände optimiert und weitere Betriebszustände verbessert werden können.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist, wenn der aktuelle Betriebszustand durch die vom Antrieb aufgenommene Leistung bestimmt ist. Die aufgenommene Leistung eines im Regelfall einen Elektromotor umfassenden Antriebs, ist leicht bestimmbar und gibt einen guten Überblick über den aktuell herrschenden Betriebszustand.

Die aufgenommene Leistung kann am einfachsten durch eine Messung des Motorstroms bestimmt werden.

Vorteilhafterweise werden die Antriebsendpositionen durch die Steuereinrichtungen unter Berücksichtigung der vom Antrieb aufgenommenen Leistung bestimmt. Am einfachsten lässt sich die Lebensdauer der Scheibenwischvorrichtung durch die Anzahl der bisherigen Lastwechsel, die bisher mit dem Kraftfahrzeug zurückgelegte Strecke oder durch die bisher vom Antrieb abgegebene Gesamtleistung bestimmen.

Besonders vorteilhaft ist es, wenn die Steuereinrichtung derart ausgebildet ist, dass sie die Kompensation nur an der der oberen Wischblattendposition entsprechenden Antriebsendposition vornimmt, da diese aufgrund der Nähe der A-Säule des Kraftfahrzeugs am kritischsten ist.

Weiterhin ist es als vorteilhaft anzusehen, wenn die Steuereinrichtung derart ausgebildet ist, dass sie bei höherer abgegebener Leistung des Antriebs die der oberen Wischblattendposition entsprechende Antriebsendposition in Richtung der A-Säule hin verschiebt. Bei höherer aufgenommene Leistung ist davon auszugehen, dass das Wischblatt über die Scheibe geschleppt wird und aufgrund der Elastizitäten und Lagerspiele seiner Soll-Position hinterher hinkt. Durch die erfindungsgemäße Ausbildung ist gewährleistet, dass auch bei einer "ausgeleierten" Scheibenwischvorrichtung die obere Wischblattendposition immer dicht an der A-Säule des Kraftfahrzeugs verläuft.

Genauso vorteilhaft ist es, wenn die Steuereinrichtung derart ausgebildet ist, dass sie bei niedriger aufgenommener Leistung des Antriebs, die der oberen Wischblattendposition entsprechende Antriebsendposition entgegen der Richtung der A-Säule hin verschiebt. Auf diese Weise ist gewährleistet, dass, wie im vorherigen Beispiel, die obere Wischblattendposition immer dicht an der A-Säule verläuft, auch wenn ein dichter Wasserfilm das Wischblatt sehr leicht über die Scheibe gleiten lässt, so dass das Wischblatt durch Überschwingen normalerweise die A-Säule berühren würde.

Besonders vorteilhaft ist es, wenn die Steuereinrichtung die Kompensation auch bei einer erweiterten Parkstellung oder bei einer alternierenden Parkstellung vornimmt, da bei diesen Betriebszuständen der Wischerarm nur sehr wenig bewegt werden muss, und so ein zuverlässiges Parken des Wischblatt bzw. ein sicheres Umlegen der Wischlippe gewährleistet ist.

### Zeichnungen

Ein Ausführungsbeispiel der Erfindung ist in den Zeichnungen dargestellt und in der nachfolgenden Beschreibung näher erläutert. Es zeigen:
Figur 1, eine erfindungsgemäße Scheibenwischvorrichtung mit einer Scheibe eines Kraftfahrzeugs in schematischer Darstellung,
Figur 2, einen Teil einer erfindungsgemäßen Scheibenwischvorrichtung mit einem Wischblatt in der unteren Wischblattendposition,
Figur 3, eine erfindungsgemäße Wischvorrichtung wie in Figur 2, jedoch mit Wischblatt in der oberen Wischblattendposition.

### Beschreibung des Ausführungsbeispiels

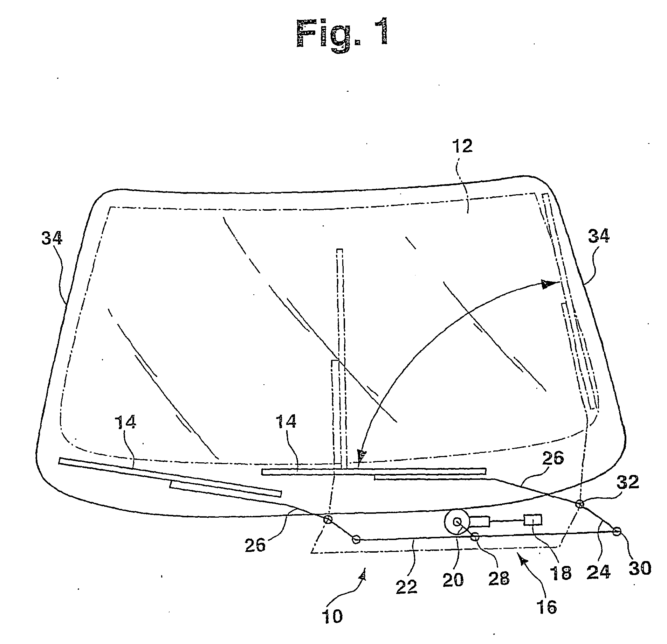

In Figur 1 ist eine erfindungsgemäße Scheibenwischvorrichtung 10 auf einer Scheibe 12 dargestellt. Die Scheibenwischvorrichtung 10 umfasst zwei Wischblätter 14 und eine Mechanik 16, sowie eine Steuereinrichtung 18. Die Mechanik 16 umfasst dabei eine Kurbelstange 20, eine Schubstange 22 und Abtriebskurbel 24. Daran befestigt sind Wischerarme 26, welche die Wischblätter 14 tragen. Kurbelstange 20, Schubstange 22, Antriebskurbel 24 und Wischerarme 26 sind dabei drehbar mittels dreier Lager 28, 30, 32 miteinander verbunden: Die Kurbelstange 20 und die Schubstange 22 über das Schubstangenlager 28, die Schubstange und die Abtriebskurbel über das Abtriebskurbellager 30 und die Abtriebskurbel 24 mit dem Wischerarm 26 über das Wischerlager 32.

Die Scheibe 12, hier eine Windschutzscheibe eines Kraftfahrzeugs, ist an ihren Seiten 34 von den A-Säulen des Kraftfahrzeugs begrenzt.

Die Wischblätter 14 sind mittels durchgezogener Linien in einer unteren Wischblattendposition 36 und mittels Strichpunktlinien in einer oberen Wischblattendposition 38 gezeichnet. Der Bereich zwischen diesen beiden Positionen 36 und 38 ergibt das Wischfeld und schließt einen Pendelwinkel P ein.

Bei der hier gezeigten Scheibenwischvorrichtung befindet sich das Wischblatt 14 in der oberen Wischblattendposition 38 im Bereich der A-Säule des Kraftfahrzeugs, also im Bereich einer der Seiten 34 der Scheibe 12.

Angetrieben wird die Mechanik 16 von einem Antrieb 40 der als reversierbarer, elektronisch kommmutierbarer Elektromotor ausgebildet ist. Dieser ist mit der Steuereinrichtung 18 verbunden, welche den Elektromotor 40 steuert.

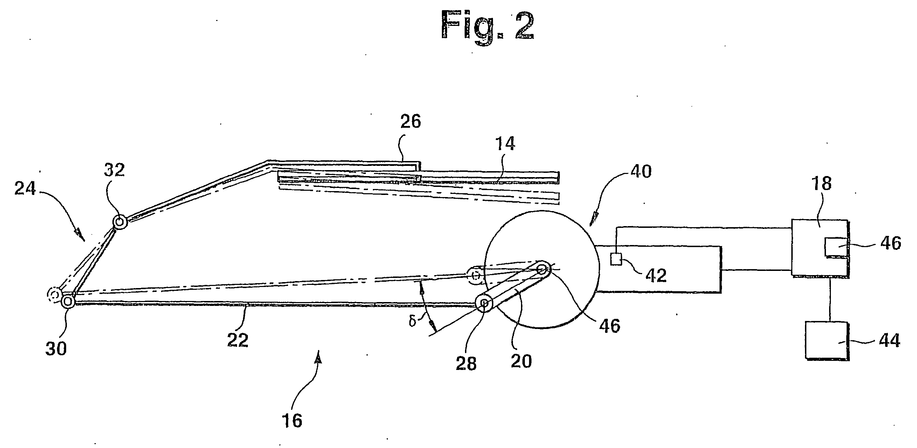

In Figur 2 ist ein Ausschnitt aus Figur 1 dargestellt, das Wischblatt 14, der Wischerarm 26 ist über das Wischerlager 32 mit der Abtriebskurbel 24 verbunden. Diese ist wiederum über das Abtriebskurbellager 30 mit der Schubstange 22 verbunden, welche über das Schubstangen lager 28 und die Kurbelstange 20 vom Elektromotor 40 angetrieben ist. Der Elektromotor 40 ist dabei mit einem als Hallsensor ausgebildeten Postitionserfassungselement 42 versehen, das Signale über die Position der Ankerwelle des Elektromotors 40 an die Steuereinrichtung 18 weiterleitet. Diese ist daher immer über die aktuelle Position der Kurbelstange 20 informiert. Außerdem kann die Steuereinrichtung 18 beispielsweise mit einem Kilometerzähler 44 verbunden sein und/oder eine Zähleinrichtung 46 aufweisen, die die Anzahl der Reversionen des Elektromotors 40 aufnimmt. Ebenso ist ein Speicherelement möglich, in dem ein die bisher aufgenommene Gesamtleistung des Elektromotors repräsentierender Wert als Lebensdauer gespeichert ist.

Der Antrieb 40 befindet sich hier in einer unteren Antriebsendposition 50, wobei sich das Wischblatt 14 in der unteren Wischblattendposition 36 befindet.

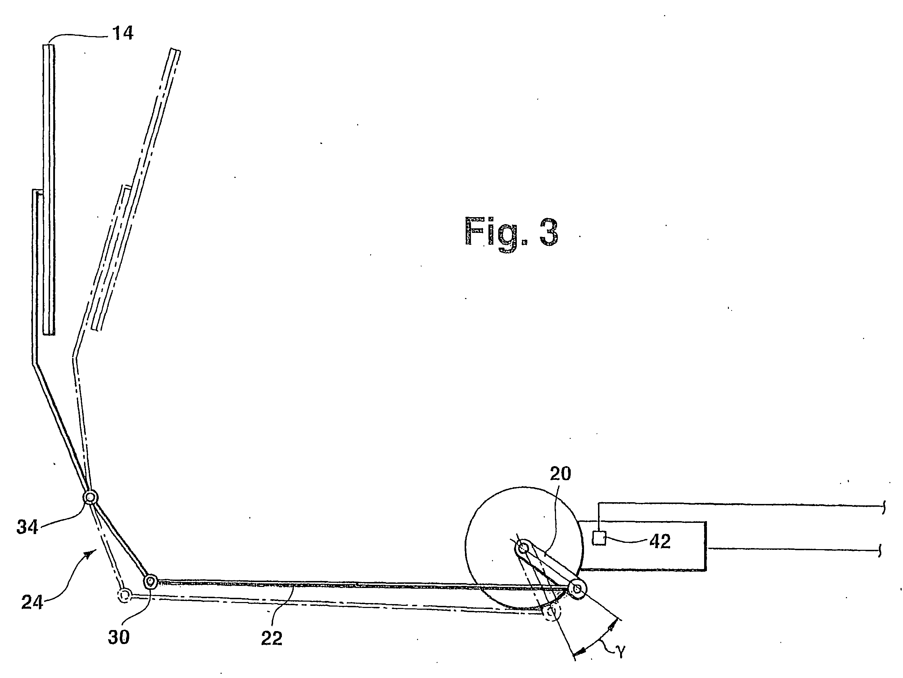

In Figur 3 ist der gleiche Bereich wie in Figur 2 dargestellt, jedoch befindet sich das Wischblatt 14 in der oberen Wischblattendposition 38 und die Kurbelstange 20 daher in der oberen Antriebsendposition.

Im folgenden soll die Funktion der Wischvorrichtung erläutert werden.

Der Elektromotor 40 bewegt über eine Schnecke und ein Schneckenrad als Teil der Mechanik 16, eine Abtriebswelle 46, mit der die Kurbelstange 20 drehfest verbunden ist. Zur Bewegung des Wischblattes 14 vollführt die Kurbelstange 20 durch den Elektromotor 40 eine pendelnde Bewegung zwischen einer oberen Antriebsendposition 48 und einer unteren Antriebsendposition 50. Diese entsprechen jeweils der oberen Wischblattendposition 38 und der unteren Wischblattendposition 36.

Aufgrund der verschiedenen Umwelteinflüsse, welche auf die Mechanik 16, insbesondere auf die Lager 28, 30, 32 wirken, vergrößert sich im Laufe der Zeit das Lagerspiel der einzelnen Lager 28, 30, 32, sowie die Elastizität der Mechanik 16 selbst, was zu einer Verschiebung der Wischblattendpositionen 36, 38 führt. Diese Verschiebungen sind jedoch nicht nur vom Spiel der Lager 26, 28, 30 abhängig, sondern auch vom aktuellen Betriebszustand der Scheibenwischvorrichtung 10. Auch die einzelnen Elastizitäten der Elemente der Mechanik 20 beeinflussen das Verhältnis zwischen Antriebsendposition 48, 50 und Wischblattendposition 38, 36.

Ist die Scheibe 12, über die das Wischblatt 14 gleitet, relativ trocken, so benötigt der Antrieb 40 sehr viel Kraft, d. h. die aufgenommene Leistung des Antriebs 40 ist im Verhältnis zur durchschnittlichen aufgenommen Leistung erhöht. Typischerweise ist hier der Motorstrom I größer, da bei üblichen Elektromotoren die aufgenommene Leistung bei konstanter Spannung typischerweise durch eine entsprechend höheren Motorstrom I verursacht ist.

Ist die Scheibe 12 sehr stark mit Feuchtigkeit benetzt, also sehr nass, so gleitet das Wischblatt 14 sehr leicht über die Scheibe 12. Ist der Antrieb 40 nun auf eine sehr schnell Betriebsstufe geschaltet, so gleitet das Wischblatt 14 in der oberen Wischblattendposition 38 aufgrund der Spiele der einzelnen Lager 28, 30, 32 und der Gesamtelastizität der Mechanik 16 zu weit in Richtung der A-Säule und berührt diese im Extremfall. Um dies zu verhindern, wird der aktuelle Betriebszustand, d. h. die aufgenommene Leistung des Antriebs 40, durch eine Messung des Motorstroms I, berücksichtigt und die obere Antriebsendposition 48 und damit die Umkehrposition der Abtriebskurbel 20 um einen Winkel Gamma verändert. Ist die Scheibenwischvorrichtung beispielsweise im Intervallbetrieb tätig, in der die Wischblätter 14 nur sehr langsam über die Scheibe gleiten, so findet ein derartiges Überschwingen nicht statt und eine Korrektur der Antriebsendposition 48 muss entgegengesetzt ausfallen oder auch gar nicht erfolgen.

Besonders relevant ist dies, wenn besondere Betriebszustände, bei denen nur kleine Auslenkungen des Wischblatts 14 benötigt werden, berücksichtigt werden. Beispielhaft sei hier die sogenannte alternierende Parkstellung genannt, wobei in regelmäßigen oder unregelmäßigen Abständen die Wischlippe umgekippt wird. Typischerweise liegt in der unteren Wischblattendposition 36, da das Wischblatt von der oberen Wischblattendposition 38 in die untere Wischblattendposition geschleppt wird, die Wischlippe derart auf der Scheibe auf, dass sie in Richtung der oberen Wischblattendposition 38 gekrümmt ist. Da die Scheibenwischvorrichtung im Regelfall 10 nicht im Betrieb ist, insbesondere auch dann wenn das Fahrzeug steht, setzt sich diese Krümmung der Wischlippe des Wischblatts 14 mit der Zeit als Normalzustand fest. Um dies zu verhindern sind Vorschläge bekannt, in regelmäßigen Abständen den Antrieb 40 derart in Betrieb zu setzen, dass der Wischerarm 26 um einen kleinen Winkel bewegt wird, so dass die Wischlippe des Wischblattes 14 kippt und somit in der entgegengesetzt gekrümmten Position jedoch trotzdem im Bereich der unteren Wischblattendposition 36 verbleibt. Hierzu wird jedoch nur ein sehr kleiner Drehwinkel der Abtriebskurbel 20 benötigt. Weisen die Lager 28, 30, 32 nun ein sehr großes Spiel auf, wie dies häufig bei älteren Kraftfahrzeugen der Fall ist, kann der Winkel um den die Abtriebskurbel 26 ausgelenkt wurde nicht mehr ausreichen, um das Wischblatt entsprechend zu kippen. Erfindungsgemäß wird dies dadurch kompensiert, dass dieser Kippwinkel der Abtriebskurbel 20 mit steigender Lebensdauer der Scheibenwischanlage vergrößert wird.

Ebenso kann erfindungsgemäß die Auslenkung der Abtriebskurbel 20 verändert werden, wenn das Wischblatt 14 in eine separate Parklage, die üblicherweise unterhalb der unteren Wischblattendposition 36 liegt, verrückt wird, da auch hier nur ein kleiner Winkel erforderlich ist, der mit steigender Lebensdauer der Scheibenwischvorrichtung 10 größer ausfallen muss.

Neben diesen zwei Beispielen sind selbstverständlich auch noch andere Betriebszustände denkbar, die bei der Kompensation der Lagerspiele bzw. aller Spiele der Mechanik 16 der Scheibenwischvorrichtung 10 berücksichtigt und korrigiert werden können. Beispielhaft sind hier nur eventuelle Auslenkungen genannt, die die Wischerarme bzw. das Wischblatt 14 bei einem Aufprall eines Fußgängers auf die Scheibenwischvorrichtung 10 durchführen sollen.

## Patentansprüche

1. Scheibenwischvorrichtung (10), insbesondere für eine Scheibe (12) eines Kraftfahrzeugs mit einem Antrieb (40), der durch eine Mechanik (16), ein Wischblatt (14), zumindest zwischen zwei Wischblattendposition (36, 38) zu bewegen vermag, wobei der Antrieb (40) zumindest zwischen zwei mit dem Wischblattendpositionen (36), (38) korrelierten Antriebsendpositionen (48, 50) bewegbar ist und ein Steuereinrichtung (18), die die Bewegung des Antriebs (40) steuert und die Spiele der Mechanik (16) lebensdauerabhängig kompensiert, **dadurch gekennzeichnet, dass** die Kompensation in Abhängigkeit des aktuellen Betriebszustands durchführbar ist.

2. Scheibenwischvorrichtung (10) nach Anspruch 1, **dadurch gekennzeichnet, dass** der aktuelle Betriebszustand durch die vom Antrieb (40) aufgenommene Leistung bestimmt ist.

3. Scheibenwischvorrichtung (10) nach Anspruch 2, **dadurch gekennzeichnet, dass** die aufgenommene Leistung durch den Motorstrom (I) bestimmt ist.

4. Scheibenwischvorrichtung (10) nach einem der vorhergehenden Ansprüche, **dadurch gekennzeichnet, dass** die Antriebsendpositionen (48, 50) durch die Steuereinrichtung (18), unter Berücksichtigung der vom Antrieb (40) aufgenommenen Leistung bestimmt sind.

5. Scheibenwischvorrichtung ( 10) nach einem der vorhergehenden Ansprüche, **dadurch gekennzeichnet, dass** die Lebensdauer der Scheibenwischvorrichtung (10) durch die Anzahl der bisherigen Lastwechsel, durch die bisher mit dem Kraftfahrzeug zurückgelegte Strecke oder durch die vom Antrieb (40) bisher abgegebene Gesamtleistung bestimmt ist.

6. Scheibenwischvorrichtung ( 10) nach einem der vorhergehenden Ansprüche, **dadurch gekennzeichnet, dass** die Steuereinrichtung (18) derart ausgebildet ist, dass sie die Kompensation nur an der, der oberen Wischblattendposition (38) entsprechenden Antriebsposition (48) vornimmt.

7. Scheibenwischvorrichtung ( 10) nach einem der vorhergehenden Ansprüche, **dadurch gekennzeichnet, dass** die obere Wischblattendposition (38) im Bereich der A-Säule des Kraftfahrzeugs angeordnet ist und die Steuereinrichtung ( 18) derart ausgebildet ist, dass sie bei höherer aufgenommener Leistung des Antriebs (40) die der oberen Wischblattendposition (38) entsprechende Antriebsendposition (48) in Richtung der A-Säule hin verschiebt.

8. Scheibenwischvorrichtung (10) nach einem der vorhergehenden Ansprüche, **dadurch gekennzeichnet, dass** die obere Wischblattendposition (38) im Bereich der A-Säule des Kraftfahrzeugs angeordnet ist und die Steuereinrichtung (18) derart ausgebildet ist, dass sie bei niedrigerer aufgenommener Leistung des Antriebs (40), die der oberen Wischblattendposition (38) entsprechende Antriebsendposition (48) entgegen der Richtung der A-Säule hin verschiebt.

9. Scheibenwischvorrichtung (10) nach einem der vorhergehenden Ansprüche, **dadurch gekennzeichnet, dass** die Steuereinrichtung (18) derart ausgebildet ist, dass sie die Kompensation bei einer erweiterten Parkstellung und/oder bei einer alternierenden Parkstellung vornimmt.
